# EUROPEAN PATENT APPLICATION

(11) **EP 4 325 730 A1**
(43) Date of publication of application: **21.02.2024**
(21) Application number: 22790736.7
(22) Date of filing: 08.03.2022
(51) Int. Cl.: H04B 5/00, G06K 7/10

(54) **ZERO-POWER-CONSUMPTION COMMUNICATION METHODS AND APPARATUSES FOR CELLULAR COMMUNICATION AND SIDELINK COMMUNICATION**

(30) Priority: 20.04.2021 CN 202110426021
(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN); XU, Weijie, Dongguan, Guangdong 523860 (CN); ZUO, Zhisong, Dongguan, Guangdong 523860 (CN); HE, Chuanfeng, Dongguan, Guangdong 523860 (CN); ZHANG, Zhi, Dongguan, Guangdong 523860 (CN); HU, Rongyi, Dongguan, Guangdong 523860 (CN); SHAO, Shuai, Dongguan, Guangdong 523860 (CN); TIAN, Wenqiang, Dongguan, Guangdong 523860 (CN); SHEN, Jia, Dongguan, Guangdong 523860 (CN); YANG, Ning, Dongguan, Guangdong 523860 (CN)
(74) Representative: Ipside
(86) International application number: PCT/CN2022/079687
(87) International publication number: WO 2022/222627

(57) **Abstract**

Zero-power-consumption communication methods and apparatuses for cellular communication and sidelink communication. The zero-power-consumption communication method for cellular communication at least includes: a zero-power-consumption device; the zero-power-consumption device receives a power supply signer, the power supply signal being used for supplying power to the zero-power-consumption device; the zero-power-consumption device receives a trigger signal sent from a network device; and the zero-power-consumption device sends a signal in a back scattering manner according to the trigger signal and the power supply signal.

## Description

The present disclosure claims a priority of a Chinese Patent Application No. 202110426021X, filed on April 20, 2021, the entire contents of which are incorporated herein by reference in its entirety.

### TECHNICAL FIELD

The present disclosure relates to the technical field of communication, in particular to a method and an apparatus for zero-power-consumption communication based on cellular communication and sidelink communication.

### BACKGROUND

The interconnection of everything is the ultimate vision of 5G/6G communication. With the continuous evolution of wireless communication technology, Internet of Things (IoT) technology is developing rapidly. The MTC/eMTC, NB-IoT series standards promoted by 3GPP have become the candidate technology standards for 5G massive MTC technology. These technology standards are expected to play a huge role in smart homes, smart cities, smart factories, remote monitoring, smart transportation, and other aspects of people's production and life.

The existing MTC/eMTC, NB-IoT terminals have technical advantages such as lower cost, cheaper price, support for ultra-low power consumption, and support for deep and wide coverage scenarios. Therefore, it is conducive to the rapid popularization of IoT technology at the early stage of development.

MTC, NB-IoT and other communication technologies, as the technical basis for enabling the interconnection of everything in the 5G era, realize low-power, low-cost, and large-connection IoT communication. How to achieve lower power consumption, lower cost communication, and wider connectivity to meet the needs of more application scenarios has become a continuous pursuit in 5G/6G design.

### SUMMARY OF THE DISCLOSURE

Some embodiments in the present disclosure provide zero-power-consumption communication methods and apparatuses for cellular communication and sidelink communication, in order to at least to solve the problem of how to achieve lower power consumption, lower cost communication, and wider connectivity to meet the needs of more application scenarios in related technologies.

In an aspect, some embodiments in the present disclosure provide a zero-power-consumption communication method based on cellular communication, including:
receiving a power supply signal, by a zero-power-consumption device, wherein the power supply signal is configured to supply power to the zero-power-consumption device;
receiving a trigger signal, by the zero-power-consumption device, wherein the trigger signal is sent from a network device;
sending a signal, by the zero-power-consumption device, through a back scattering way according to the power supply signal and the trigger signal.

In another aspect, some embodiments in the present disclosure provide a zero-power-consumption communication method based on sidelink communication, including:
receiving a power supply signal sent from a first sidelink communication device, by a zero-power-consumption device, wherein the power supply signal is configured to supply power to the zero-power-consumption device;
receiving a trigger signal, by the zero-power-consumption device, wherein the trigger signal is sent from a second sidelink communication device;
sending a back scattering signal, by the zero-power-consumption device, to the first sidelink communication device or the second sidelink communication device according to the power supply signal and the trigger signal.

In another aspect, some embodiments in the present disclosure provide a zero-power-consumption communication method based on cellular communication and sidelink communication, including:
receiving a power supply signal sent from a terminal device, by a zero-power-consumption device, wherein the power supply signal is configured to supply power to the zero-power-consumption device;
receiving a trigger signal, by the zero-power-consumption device;
sending a back scattering signal, by the zero-power-consumption device, to the network device according to the power supply signal and the trigger signal.

In another aspect, some embodiments in the present disclosure provide a zero-power-consumption communication method based on cellular communication and sidelink communication, including:
receiving a power supply signal and a trigger signal, by a zero-power-consumption device, wherein the power supply signal is configured to supply power to the zero-power-consumption device; and the power supply signal and the trigger signal are sent under the control of a network device;
sending a back scattering signal, by the zero-power-consumption device, to a terminal device according to the power supply signal and the trigger signal, in order to send radio data by the terminal device to the network device according to the back scattering signal.

In another aspect, some embodiments in the present disclosure provide a zero-power consumption communication apparatus based on cellular communication, including:
a receiving module, applied to receiving a power power supply signal, wherein the power supply signal is configured to supply power to the zero-power-consumption device;
the receiving module, further applied to receiving a trigger signal;
a sending module, applied to sending a signal through a back scattering way according to the power supply signal and the trigger signal.

In another aspect, some embodiments in the present disclosure provide a zero-power consumption communication apparatus based on sidelink communication, including:
a receiving module, applied to receiving a power supply signal sent from a first sidelink communication device, wherein the power supply signal is configured to supply power to the zero-power-consumption device;
the receiving module, further applied to receiving a trigger signal sent from a second sidelink communication device;
a sending module, sending a back scattering signal to the first sidelink communication device or the second sidelink communication device according to the power supply signal and the trigger signal.

In another aspect, some embodiments in the present disclosure provide a zero-power-consumption communication apparatus based on cellular communication and sidelink communication, including:
a receiving module, applied to receiving a power supply signal sent from a terminal device, wherein the power supply signal is configured to supply power to the zero-power-consumption device;
the receiving module, further applied to receiving a trigger signal;
a sending module, sending a back scattering signal to the network device according to the power supply signal and the trigger signal.

In another aspect, some embodiments in the present disclosure provide a zero-power-consumption communication apparatus based on cellular communication and sidelink communication, including:
a receiving module, applied to receiving a power supply signal and a trigger signal, wherein the power supply signal is configured to supply power to the zero-power-consumption device; and the power supply signal and the trigger signal are sent under the control of a network device;
a sending module, applied to sending a back scattering signal to a terminal device according to the power supply signal and the trigger signal, in order to send radio data by the terminal device to the network device according to the back scattering signal.

In another aspect, some embodiments in the present disclosure provide a zero-power-consumption device including a processor and a transceiver, wherein the transceiver is applied to receiving a power supply signal, wherein the power supply signal is configured to supply power to the zero-power-consumption device; receiving a trigger signal; and sending a signal through a back scattering way according to the power supply signal and the trigger signal.

In another aspect, some embodiments in the present disclosure provide a zero-power-consumption device including a processor and a transceiver, wherein the transceiver is applied to receiving a power supply signal sent from a first sidelink communication device, wherein the power supply signal is configured to supply power to the zero-power-consumption device; receiving a trigger signal sent from a second sidelink communication device; and sending a back scattering signal to the first sidelink communication device or the second sidelink communication device according to the power supply signal and the trigger signal.

In another aspect, some embodiments in the present disclosure provide a zero-power-consumption device including a processor and a transceiver, wherein the transceiver is applied to receiving a power supply signal sent from a terminal device, wherein the power supply signal is configured to supply power to the zero-power-consumption device; receiving a trigger signal; and sending a back scattering signal to the network device according to the power supply signal and the trigger signal.

In another aspect, some embodiments in the present disclosure provide a zero-power-consumption device including a processor and a transceiver, wherein the transceiver is applied to receiving a power supply signal and a trigger signal, wherein the power supply signal is configured to supply power to the zero-power-consumption device; and the power supply signal and the trigger signal are sent under the control of a network device; and sending a back scattering signal to a terminal device according to the power supply signal and the trigger signal, in order to send radio data by the terminal device to the network device according to the back scattering signal.

In another aspect, some embodiments in the present disclosure provide a computer readable storage medium storing a computer program, wherein the computer program is executed by a processor to perform a zero-power-consumption communication method based on cellular communication as claimed in any one of claims 1 to 8; or perform a zero-power-consumption communication method based on sidelink communication as claimed in any one of claims 9 to 13; or perform a zero-power-consumption communication method based on cellular communication and sidelink communication as above; or perform a zero-power-consumption communication method based on cellular communication and sidelink communication as above.

### BRIEF DESCRIPTION OF THE DRAWINGS

The accompanying drawings illustrated herein are used to provide a further understanding of the present application and form part of the present application, and the schematic embodiments of the present application and the description thereof are used to explain the present application and do not constitute an undue limitation of the present application. In the accompanying drawings:
FIG. 1 is a schematic view of zero-power-consumption communication according to some embodiments of the present disclosure.
FIG. 2 is a schematic view of back scattering communication according to some embodiments of the present disclosure.
FIG. 3 is a schematic view of RF power harvesting according to some embodiments of the present disclosure.
FIG. 4 is a schematic view of a zero-power-consumption communication system based on cellular communication provided in some embodiments of the present disclosure.
FIG. 5 is a schematic view of a zero-power-consumption communication system based on sidelink communication provided in some embodiments of the present disclosure.
FIG. 6 is a schematic view of a hybrid zero-power-consumption communication system based on cellular communication and sidelink communication provided in some embodiments of the present disclosure.
FIG. 7 is a block diagram of a zero-power-consumption communication apparatus based on cellular communication provided in some embodiments of the present disclosure.
FIG. 8 is a block diagram of a zero-power-consumption communication apparatus based on sidelink communication provided in some embodiments of the present disclosure.
FIG. 9 is a block diagram of a zero-power-consumption communication apparatus based on cellular communication and sidelink communication provided in some embodiments of the present disclosure.
FIG. 10 is a block diagram of a zero-power-consumption communication apparatus based on cellular communication and sidelink communication provided in some embodiments of the present disclosure.
FIG. 11 is a block diagram of a zero-power-consumption communication system provided in some embodiments of the present disclosure.

### DETAILED DESCRIPTION

The present disclosure will be described in detail below with reference and accompanying drawings in conjunction with embodiments. It should be noted that the embodiments and the features in the present disclosure can be combined without conflict.

It should be noted that the terms "first", "second", etc. in the descriptions and claims of this disclosure and the above-mentioned drawings are used to distinguish similar objects and are not necessary to describe a specific order or sequence.

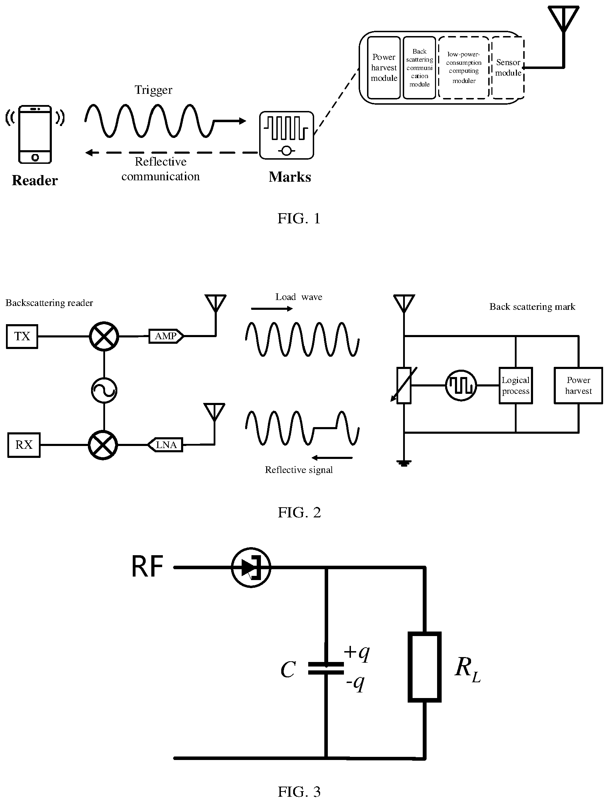

In recent years, zero-power-consumption communication technology has developed rapidly, in which the key technologies of zero-power-consumption communication include power harvesting, back scattering communication, and low-power-consumption computing. FIG. 1 is a schematic view of zero-power-consumption communication according to some embodiments of the present disclosure. As shown in FIG. 1, a typical zero-power-consumption communication system includes a reader and a zero-power-consumption device. The reader transmits radio waves for providing power to the zero-power-consumption device. An RF power harvesting module installed in the zero-power-consumption device may harvest the power carried by the radio waves in space (the radio waves transmitted by the reader are shown in FIG. 1) for driving a low-power-consumption computing module of the zero-power device and realizing the back scattering communication. After the zero-power-consumption device obtains the power, it may receive the read-write control command and send the data to the read-write based on the control signaling through the backward scattering way. The sent data may come from the stored data in zero-power-consumption device itself (such as identity marks or pre-written information, for example, the production date of goods, brand, manufacturer, etc.). The zero-power-consumption device may also load all kinds of sensors, thus data collected by all kinds of sensors is reported based on the zero-power-consumption mechanism. As can be seen, the zero-power-consumption device itself does not need a battery, while the use of low-power-consumption computing module may achieve simple signal demodulation, decoding or coding, modulation, and other simple computing work, therefore the zero-power-consumption module only requires minimal hardware design, making the zero-power-consumption device very low cost and small size.

### Power supply signal and trigger signal in zero-power-consumption communication system

### Power supply signal

From the category of power supply signal carrier, it may be a base station, smart phone, smart gateway, charging station, micro base station, etc.;
From the category of frequency band, the radio wave used as power supply may be low frequency, medium frequency, high frequency, etc.;
From the category of waveform, radio waves used as power supply may be sine, square, triangle, pulse, rectangle, etc.;

In addition, it may be a continuous or discontinuous wave (i.e., allowing for certain time interruptions)
The power supply signal may be a certain signal specified in the 3GPP standard. For example, SRS, PUSCH, PRACH, PUCCH, PDCCH, PDSCH, PBCH, etc.

### Trigger signal

From the category of power supply signal carrier, it may be a base station, smart phone, smart gateway, charging station, micro base station, etc.;
From the category of frequency band, the radio wave used as power supply may be low frequency, medium frequency, high frequency, etc.;
From the category of waveform, radio waves used as power supply may be sine, square, triangle, pulse, rectangle, etc.;

In addition, it may be a continuous or discontinuous wave (i.e., allowing for certain time interruptions)
The trigger signal may be a certain signal specified in the 3GPP standard. For example, SRS, PUSCH, PRACH, PUCCH, PDCCH, PDSCH, PBCH, etc.; or it may be a new signal.

### Key technologies for zero-power-consumption communication

### Back Scattering communication

FIG. 2 is a schematic view of back scattering communication according to some embodiments of the present disclosure. As shown in FIG 2, the zero-power-consumption device (the backscattering tag in FIG. 2) receives the carrier signal sent from the backscattering reader and collects power through the RF power harvesting module. In turn, the low-power-consumption processing module (logic processing module in FIG. 2) supplies power, as well as modulates and backscatters the incoming wave signal.

The main features are as follows:
(1) The terminal does not actively transmit signals, and back scattering communication is achieved by modulating the incoming wave signal;
(2) The terminal does not rely on a traditional active amplifier transmitter, and uses a low-power-consumption computing unit, which greatly reduces hardware complexity;
(3) Battery-free communication can be achieved by combining RF power harvesting.

### RF Power Harvesting (RF Power Harvesting)

FIG. 3 is a schematic view of RF power harvesting according to some embodiments of the present disclosure. As shown in FIG. 3, battery-free can be achieved by using the RF module to realize the harvesting of spatial electromagnetic wave power through electromagnetic induction, and then realize the driving of load circuits (low-power-consumption computing, sensors, etc.).

Under the cellular-based zero-power-consumption communication system, the zero-power-consumption communication method includes:
receiving a power supply signal, by a zero-power-consumption device, wherein the power supply signal is configured to supply power to the zero-power-consumption device;
receiving a trigger signal, by the zero-power-consumption device, wherein the trigger signal is sent from a network device;
sending a signal, by the zero-power-consumption device, through a back scattering way according to the power supply signal and the trigger signal.

In some embodiments, the receiving the power supply signal by the zero-power-consumption device includes:
receiving the power supply signal, by the zero-power-consumption device, wherein the power supply signal is sent from the network device;
the sending signal, by the zero-power-consumption device, through the back scattering way according to the power supply signal and the trigger signal, includes:
   sending a back scattering signal, by the zero-power-consumption device, to the network device according to the power supply signal and the trigger signal.

In some embodiments, a time delay between sending the power supply signal by the network device and sending the trigger signal by the network device is a preset value or a configurable value;
a time delay between receiving the trigger signal by the zero-power-consumption device and sending the back scattering signal by the zero-power-consumption device is a preset value; or configured by the network device and informed to the zero-power-consumption device.

In some embodiments, the receiving the power supply signal by the zero-power-consumption device, includes:
receiving the power supply signal, by the zero-power-consumption device, wherein the power supply signal is sent from the network device;
the sending signal, by the zero-power-consumption device, through the back scattering way according to the power supply signal and the trigger signal includes:
sending a signal, by the zero-power-consumption device, to a terminal device through the back scattering way according to the power supply signal and the trigger signal.

In some embodiments, the sending the signal by the zero-power-consumption device to a terminal device through the back scattering way according to the power supply signal and the trigger signal includes:
sending a sleeping signal or a wake-up signal by the zero-power-consumption device to a terminal device through the back scattering way according to the power supply signal and the trigger signal.

In some embodiments, a time delay between sending the power supply signal by the network device and sending the trigger signal by the network device is a preset value or a configurable value;
a time delay between receiving the trigger signal by the zero-power-consumption device and sending the sleeping signal or the wake-up signal by the zero-power-consumption device is a preset value; or configured by the network device and informed to the zero-power-consumption device.

In some embodiments, the receiving the power supply signal by the zero-power-consumption device includes:
receiving a power supply signal, by a zero-power-consumption device, sent from a first communication device, wherein the first communication device is different from the network device;
the sending a back scattering signal, by the zero-power-consumption device, through the back scattering way according to the power supply signal and the trigger signal includes:
sending a back scattering signal, by the zero-power-consumption device, to the network device according to the power supply signal and the trigger signal.

In some embodiments, a time delay between receiving the trigger signal by the zero-power-consumption device and sending the back scattering signal by the zero-power-consumption device is a preset value; or configured by the network device and informed to the zero-power-consumption device.
Under a zero-power-consumption communication system based on sidelink communication, the zero-power-consumption communication method includes:
receiving a power supply signal sent from a first sidelink communication device, by a zero-power-consumption device, wherein the power supply signal is configured to supply power to the zero-power-consumption device;
receiving a trigger signal, by the zero-power-consumption device, wherein the trigger signal is sent from a second sidelink communication device;
sending a back scattering signal, by the zero-power-consumption device, to the first sidelink communication device or the second sidelink communication device according to the power supply signal and the trigger signal.

In some embodiments, the first sidelink communication device and the second sidelink communication device are a same sidelink communication device;
the first sidelink communication device and the second sidelink communication device are terminal devices; or the first sidelink communication device and the second sidelink communication device are gateway devices.

In some embodiments, a time delay between sending the power supply signal by the terminal device and sending the trigger signal by the terminal device is a preset value or a configurable value; a time delay between receiving the trigger signal by the zero-power-consumption device and sending a back scattering signal by the zero-power-consumption device is a preset value; or configured by the terminal device and informed to the zero-power-consumption device;
a time delay between sending the power supply signal by the gateway device and sending the trigger signal by the gateway device is a preset value or a configurable value; a time delay between receiving the trigger signal by the zero-power-consumption device and sending a back scattering signal by the zero-power-consumption device is a preset value; or configured by the gateway device and informed to the zero-power-consumption device.

In some embodiments, the first sidelink communication device and the second sidelink communication device are different sidelink communication devices;
the first sidelink communication device is any one of a terminal device, a gateway device, and a dedicated power supply device;
the second sidelink communication device is any one of a terminal device, a gateway device, and a dedicated power supply device.

In some embodiments, a time delay between receiving the trigger signal by the zero-power-consumption device and sending the back scattering signal by the zero-power-consumption device is a preset value; or configured by the first sidelink communication device and informed to the zero-power-consumption device; or configured by the second sidelink communication device and informed to the zero-power-consumption device.

Under a zero-power-consumption communication system based on cellular communication and sidelink communication, the zero-power-consumption communication method includes:
receiving a power supply signal sent from a terminal device, by a zero-power-consumption device, wherein the power supply signal is configured to supply power to the zero-power-consumption device;
receiving a trigger signal, by the zero-power-consumption device;
sending a back scattering signal, by the zero-power-consumption device, to the network device according to the power supply signal and the trigger signal.

In some embodiments, the power supply signal is sent from the terminal device according to a radio signaling sent from a network device;
the receiving trigger signal, by the zero-power-consumption device, includes:
receiving a trigger signal sent from the terminal device, by the zero-power-consumption device, wherein the trigger signal is sent from the terminal device according to the radio signaling.

In some embodiments, a time delay between sending a power supply signal by the terminal device and sending a trigger signal by the terminal device is a preset value; or configured by the network device and informed through the radio signaling;
a time delay between receiving a trigger signal by the zero-power-consumption device and sending a back scattering signal by the zero-power-consumption device is a preset value; or configured by the network device and informed to the terminal device through the radio signaling, and informed to the zero-power-consumption device by the terminal device, or informed to the zero-power-consumption device by the network device;
a time delay between receiving the radio signaling by the terminal device and sending the power supply signal is a preset value; or configured by the network device and informed to the terminal device through the radio signaling.

In some embodiments, the power supply signal is sent from the terminal device according to a radio signaling sent from the network device;
the receiving the trigger signal, by the zero-power-consumption device, includes:
receiving a trigger signal sent from the network device, by the zero-power-consumption device.

In some embodiments, a time delay between sending the radio signaling by the network device and sending the trigger signal by the network signal device is a preset value or a configurable value;
a time delay between receiving the trigger signal by the zero-power-consumption device and sending a back scattering signal by the zero-power-consumption device is a preset value; or configured by the network device and informed;
a time delay between receiving the radio signaling by the terminal device and sending the power supply signal by the terminal device is a preset value; or configured by the network device and informed to the terminal device by the radio signaling.

Under a zero-power-consumption communication system based on cellular communication and sidelink communication, the zero-power-consumption communication method includes:
receiving a power supply signal and a trigger signal, by a zero-power-consumption device, wherein the power supply signal is configured to supply power to the zero-power-consumption device; and the power supply signal and the trigger signal are sent under the control of a network device;
sending a back scattering signal, by the zero-power-consumption device, to a terminal device according to the power supply signal and the trigger signal, to send radio data by the terminal device to the network device according to the back scattering signal.

In some embodiments, the receiving a power supply signal and a trigger signal by a zero-power-consumption device, includes:
receiving the power supply signal, by the zero-power-consumption device, wherein the power supply signal is sent from the network device;
receiving the trigger signal, by the zero-power-consumption device, wherein the power supply signal is sent from the network device.

In some embodiments, a time delay between sending the power supply signal by the network device and sending the trigger signal by the network device is a preset value or a configurable value;
a time delay between receiving the trigger signal by the zero-power-consumption device and sending the back scattering signal by the zero-power-consumption device is a preset value; or configured by the network device and informed;
a time delay between receiving the back scattering signal by the terminal device and sending radio data by the terminal device is a preset value; or configured by the network device and informed to the terminal device; or configured by the network device and informed to the zero-power consumption device, and informed to the terminal device by the zero-power-consumption device through the back scattering signal.

In some embodiments, the receiving a power supply signal and a trigger signal by a zero-power-consumption device, includes:
receiving the power supply signal, by the zero-power-consumption device, wherein the power supply signal is sent from the terminal device;
receiving the trigger signal, by the zero-power-consumption device, wherein the power supply signal is sent from the terminal device;
wherein the power supply signal and the trigger signal are sent from the terminal device according to the radio signal sent from the network device.

In some embodiments, a time delay between sending the power supply signal by the terminal device and sending the trigger signal by the terminal device is a preset value; or configured by the network device and informed to the terminal device;
a time delay between receiving the trigger signal by the zero-power-consumption device and sending the back scattering signal by the zero-power-consumption device is a preset value; or configured by the network device and informed to the terminal device through the radio signaling, and informed to the zero-power-consumption device by the terminal device or informed to the zero-power-consumption device by the network device;
a time delay between receiving the radio signaling by the terminal device and sending the power supply signal by the terminal device is a preset value; or configured by the network device and informed to the terminal device;
a time delay between receiving the back scattering signal by the terminal device and sending radio signaling data by the terminal device is a preset value; or configured by the network device and informed to the terminal device; or configured by the network device and informed to the terminal device, and informed to the terminal device by the zero-power-consumption device.

It should be noted that the power supply signal and the trigger signal may be sent from the same communication device or by different communication devices.

It should be noted that the communication device can send the power supply signal as well as the trigger signal at different time. Absolutely, the communication device may also send the supply signal and the trigger signal at the same time.

For example, the communication device may send a trigger signal to the zero-power-consumption device after sending a power supply signal to the zero-power device for obtaining power.

Another example is that the communication device sends the power supply signal for obtaining power from the zero-power-consumption device along with a trigger signal configured to instruct the zero-power device to engage in back scattering communication or to wake up the zero-power-consumption device when a preset condition is met.

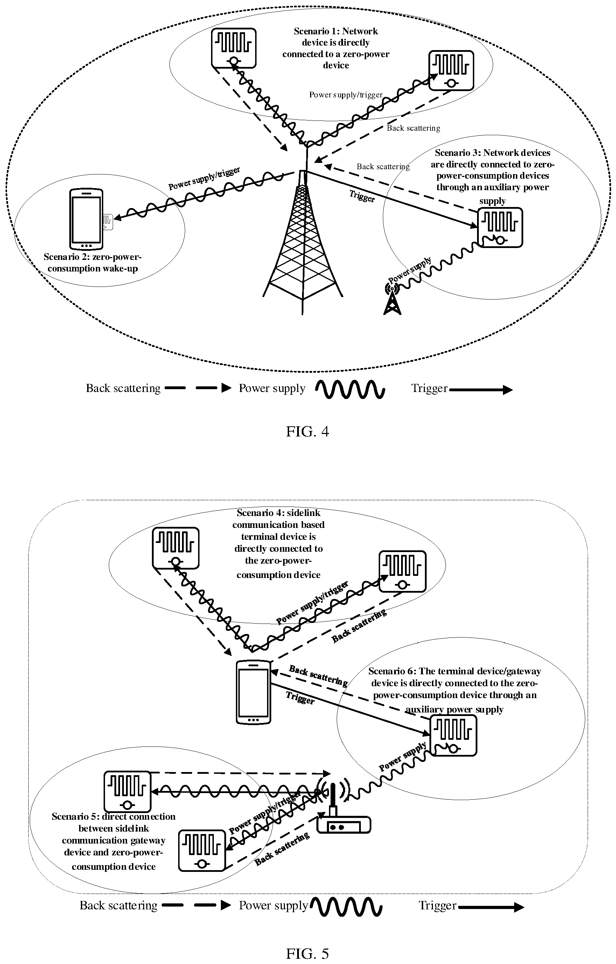

FIG. 4 is a schematic view of a zero-power-consumption communication system based on cellular communication provided in some embodiments of the present disclosure. The disclosure is used in scenarios 1-3.

### Scenario 1: Network device is directly connected to a zero-power device.

In this scenario, the communication device may be a network device (e.g., a base station) of a cellular system. The zero-power-consumption device is powered and triggered by the network device. The zero-power-consumption device sends a back scattering signal to the network device after it has received enough power and a trigger signal.

The specific process is as follows:
Step 1: The network device sends a power supply signal to the zero-power device for supplying power to the zero-power-consumption device.
Step 2: The network device sends a trigger signal to the zero-power-consumption device.
Step 3: Based on the trigger signal and the power supply signal, the zero-power-consumption device sends a back scattering signal to the network device.

In some embodiments, a time delay between sending the power supply signal by the network device and sending the trigger signal by the network device is a preset value or a configurable value; a time delay between receiving the trigger signal by the zero-power-consumption device and sending the back scattering signal by the zero-power-consumption device is a preset value, or configured by the network device and informed to the zero-power-consumption device.

The network device may send the trigger signal to the zero-power-consumption device after a T0 time delay of sending the power supply signal to the zero-power-consumption device.

The zero-power-consumption device may proceed back scattering communication to the network device after a T1 time delay of receiving the trigger signal.

Specifically, T0 may be a preset fixed value, i.e., mutually negotiated in advance between the network device and the zero-power-consumption device. It can also be a configurable value, which can be, for example, a value associated with at least one of the communication distance, carrier frequency, and power of the supply/trigger signal emission. In the case of configuration, the network device may carry the configured value in the power supply signal. It can also be sent to the zero-power-consumption device by means of another signaling (e.g., among cellular systems, it can be radio link control RRC signaling, media access control unit MAC CE, and downlink control information DCI).

Specifically, T1 can be a preset fixed value, i.e., mutually negotiated in advance between the network device and the zero-power-consumption device. It can also be a configurable value, which can be, for example, a value associated with at least one of the communication distance, carrier frequency, power of supply/trigger signal emission, etc. In the case of configuration, the network device may carry the configured value in the power supply and/or trigger signal. It can also be sent to the zero-power-consumption device by means of other signals (e.g., radio link control RRC signaling, downlink control information DCI, and side-channel control information SCI).

### Scenario 2: A multi-device module containing zero-power-consumption devices.

The zero-power-consumption device is combined with other devices and used as a module of other devices. Here, the zero-power device is used as a sleeping/wake-up module of the intelligent terminal an example. The power supply and communication trigger of the zero-power-consumption device is undertaken by the network device. After obtaining enough power and receiving the trigger signal, the zero-power-consumption device uses backscattering to send a sleeping signal or wake-up signal to the intelligent terminal, which in turn makes sleep or wakes up the intelligent terminal device.

The specific process is as follows:
Step 1: The network device sends a power supply signal to the zero-power-consumption device for supplying power to the zero-power-consumption device.
Step 2: The network device sends a trigger signal to the zero-power device.
Step 3: Based on the trigger signal and the power supply signal, the zero-power-consumption device sends a signal to the terminal device through a back scattering way.

In some possible embodiments, the zero-power-consumption device sends a sleeping signal or a wake-up signal to the terminal device through backscattering based on the trigger signal and the power supply signal.

For example, the wake-up signal may be applied in the Discontinuous Reception (DRX) among the wake-up signal.

In some embodiments, a time delay between sending the power supply signal by the network device and sending the trigger signal by the network device is a preset value or a configurable value; a time delay between receiving the trigger signal by the zero-power-consumption device and sending the sleeping or wake-up signal by the zero-power-consumption device is a preset value, or configured by the network device and informed to the zero-power-consumption device.

The network device may send the trigger signal to the zero-power-consumption device after a T2 time delay of sending the power supply signal to the zero-power-consumption device.

The zero-power-consumption device may send a sleeping or wake-up signal to the terminal device by backscattering after a T3 time delay of receiving the trigger signal to make sleep or wake up the terminal device.

Specifically, T2 may be a preset fixed value, i.e., mutually negotiated in advance between the network device and the zero-power-consumption device. It can also be a configurable value, which can be, for example, a value associated with the communication distance, carrier frequency, and power of supply/trigger signal transmission. In the case of configuration, the network device may carry the configured value in the power supply signal. It can also be sent to the zero-power-consumption device by means of another signaling (e.g., among cellular systems, it can be radio link control RRC signaling, media access control unit MAC CE, and downlink control information DCI).

Specifically, T3 can be a preset fixed value, i.e., mutually negotiated in advance between the network device and the zero-power-consumption device. It can also be a configurable value, which can be, for example, a value associated with the communication distance, carrier frequency, power of supply/trigger signal transmission, etc. In the case of configuration, the network device may carry the configured value in the power supply and/or trigger signal. It can also be sent to the zero-power-consumption device by means of other signals (e.g., radio link control RRC signaling, downlink control information DCI, and side-channel control information SCI).

### Scenario 3: Network devices are directly connected to zero-power-consumption devices through an auxiliary power supply.

The power supply and communication trigger of zero-power-consumption devices is provided by different devices. For example, the power supply signal is sent through the network device, and the trigger signal is sent from other devices. Another example is that the power supply signal is sent through the terminal device and the trigger signal is sent from other devices.

The specific process is as follows:
Step 1: The first communication device sends a power supply signal to the zero-power-consumption device for supplying power to the zero-power-consumption device, and the first communication device is different from the network device.
Step 2: The network device sends a trigger signal to the zero-power-consumption device.
Step 3: Based on the trigger signal and the power supply signal, the zero-power-consumption device sends a back scattering signal to the network device.

Specifically, the first communication device includes at least one of the following: a base station, a relay device, a charging station, other smart terminal, etc.

In some embodiments, it is also possible for the network device to supply power to the zero-power-consumption device and for the first communication device to trigger the zero-power-consumption device to send a back scattering signal to the network device.

In some embodiments, the time delay between the zero-power-consumption device receiving the trigger signal and sending the back scattering signal is a preset value, or configured by the network device and informed to the zero-power-consumption device.

In some embodiments, the network device may send the trigger signal to the zero-power-consumption device by the first communication device after a T4 time delay of sending the power supply signal to the zero-power-consumption device.

The zero-power-consumption device may proceed back scattering communication to the network device after a time delay of T5 of receiving the trigger signal.

Specifically, T4 may be a preset value, i.e., a pre-negotiated tripartite determination by the network device, the first communication device, and the zero-power-consumption device. It can also be a configurable value, which can be, for example, a value associated with the communication distance, carrier frequency, power of supply/trigger signal transmission, etc. In the case of configuration, the network device can carry the configured value in the power supply signal. It can also be sent to the zero-power-consumption device and the first communication device by means of other signaling (for example, among cellular systems, it can be radio link control RRC signaling, media access control unit MAC CE, and downlink control information DCI), and also determined by the measurement results of the terminal device.

Specifically, T5 may be a preset value, i.e., determined in advance by mutual agreement between the first communication device and the zero-power-consumption device. It can also be a configurable value, which can be, for example, a value associated with the communication distance, carrier frequency, power of supply/trigger signal transmission, etc. In the case of configuration, the network device may carry the configured value in the power supply signal. It can also be sent to the zero-power-consumption device by means of other signaling (e.g., among cellular systems, it can be radio link control RRC signaling, media access control unit MAC CE, and downlink control information DCI), and it can also be determined by the measurement results of the terminal device and sent to the zero-power-consumption device by means of sidelink control information SCI.

FIG. 5 is a schematic view of a zero-power-consumption communication system based on sidelink communication provided in some embodiments of the present disclosure The disclosure is used in scenarios 4-6.

### Scenario 4: sidelink communication based terminal device is directly connected to the zero-power-consumption device (the first sidelink communication device that performs power supply and the second sidelink communication device that performs triggering are the same sidelink communication device)

The power supply and communication trigger of the zero-power-consumption device are both undertaken by the same intelligent terminal (e.g., smartphone), and the zero-power-consumption device uses backscattering to send signals to the intelligent terminal after obtaining sufficient power and receiving the trigger signal.

The specific process is as follows:
Step 1: The terminal device sends a power supply signal to the zero-power-consumption device for supplying power to the zero-power-consumption device.
Step 2: The terminal device sends a trigger signal to the zero-power-consumption device.
Step 3: Based on the trigger signal and the power supply signal, the zero-power-consumption device sends a back scattering signal to the terminal device for communication.

In some embodiments, a time delay between the terminal device sending the power supply signal and sending the trigger signal is a preset value, or, a configurable value; the time delay between the zero-power-consumption device receiving the trigger signal and sending the back scattering signal is a preset value, or, the time delay is configured by the terminal device and informed to the zero-power-consumption device.

In some embodiments, the terminal device may send the trigger signal to the zero-power-consumption device after a T6 time delay of sending the supply signal to the zero-power-consumption device.

After a T7 time delay of the zero-power-consumption device receiving the trigger signal, the zero-power device proceeds backscattering communication to the terminal device.

Specifically, T6 may be a preset a fixed value, i.e., the terminal device and the zero-power-consumption device are mutually negotiated in advance. It can also be a configurable value, which can be, for example, a value associated with the communication distance, carrier frequency, power of supply/trigger signal transmission, etc. In the case of configuration, the terminal device may carry the configured value in the power supply signal. It can also be sent to the zero-power-consumption device by means of other signaling (e.g., in a cellular system, the terminal sends a radio link control RRC signaling, media access control unit MAC CE, and downlink control information DCI based on the network).

Specifically, T7 can be a preset fixed value, i.e., determined in advance by mutual agreement between the terminal device and the zero-power-consumption device. It can also be a configurable value, which can be, for example, a value associated with the communication distance, carrier frequency, power of supply/trigger signal transmission, etc. In the case of configuration, the terminal device may carry the configured value in the power supply signal. It can also be sent to the zero-power-consumption device by means of other signaling (e.g., in cellular systems, the terminal sends radio link control RRC signaling, media access control unit MAC CE, and downlink control information DCI based on the network).

### Scenario 5: direct connection between sidelink communication gateway device and zero-power-consumption device (the first sidelink communication device for power supply and the second sidelink communication device for triggering are the same sidelink communication device)

The power supply and communication trigger of the zero-power-consumption device is undertaken by the same gateway device (e.g., router, optical cat, and switch, etc.), and the zero-power-consumption device uses backscattering to send signals to the intelligent terminal after obtaining enough power and receiving the trigger signal.

The specific process is as follows:
Step 1: The gateway device sends a power supply signal to the zero-power-consumption device for supplying power to the zero-power-consumption device.
Step 2: The gateway device sends a trigger signal to the zero-power-consumption device.
Step 3: Based on the trigger signal and the power supply signal, the zero-power-consumption device sends a back scattering signal to the gateway device for communication.

In some embodiments, the time delay between the gateway device sending the power supply signal and sending the trigger signal is a preset value, or, a configurable value; the time delay between the zero-power-consumption device receiving the trigger signal and sending the back scattering signal is a preset value, or, the time delay is configured by the gateway device and informed to the zero-power-consumption device.

In some embodiments, the gateway device may send the trigger signal to the zero-power-consumption device after a T8 time delay of sending the supply signal to the zero-power-consumption device.

The zero-power-consumption consumption device may back scattering communication to the gateway device after a T9 time delay in receiving the supply signal.

Specifically, T8 may be a preset fixed value, i.e., mutually negotiated in advance between the gateway device and the zero-power-consumption device. It can also be a configurable value, which can be, for example, a value associated with the communication distance, carrier frequency, power of supply/trigger signal transmission, etc. In the case of configuration, the gateway device may carry this configured value in the power supply signal. It can also be sent to the zero-power-consumption device by means of other signaling.

Specifically, T9 may be a preset fixed value, i.e., mutually negotiated in advance between the gateway device and the zero-power-consumption device. It can also be a configurable value, which can be, for example, a value associated with the communication distance, carrier frequency, power of supply/trigger signal transmission, etc. In the case of configuration, the gateway device may carry this configured value in the power supply signal. It can also be sent to the zero-power-consumption device by means of other signaling.

### Scenario 6: The terminal device/gateway device is directly connected to the zero-power-consumption device through an auxiliary power supply (the first sidelink communication device that performs the power supply and the second sidelink communication device that performs the triggering are different sidelink communication devices).

The power supply and communication trigger of the zero-power-consumption device are performed by different devices (e.g., terminal device and gateway device). For example, the communication triggering of a zero-power-consumption device is undertaken by the terminal device, and the power supply is undertaken by the gateway device. Another example is that the communication trigger of a zero-power-consumption device is undertaken by the gateway device, and the power supply is undertaken by the terminal device. Another example is that the communication trigger of the zero-power-consumption device is carried out by the gateway device and the power supply is carried out by a different gateway device. Further, for example, the communication trigger of the zero-power-consumption device, the supply of power is undertaken by a different terminal device. The zero-power-consumption device uses backscattering for communication after obtaining sufficient power and receiving a trigger signal.

The specific process is as follows:
Step 1: The first sidelink communication device sends a power supply signal to the zero-power-consumption device for supplying power to the zero-power-consumption device.
Step 2: The second sidelink communication device sends a trigger signal to the zero-power-consumption device.
Step 3: Based on the trigger signal and the power supply signal, the zero-power-consumption consumption device sends a back scattering signal to the first sidelink communication device or the second sidelink communication device.

Specifically, the first sidelink communication device includes at least one of the following: a terminal device, a gateway device, and a dedicated power supply device.

Specifically, the second sidelink communication device includes at least one of the following: a terminal device, a gateway device, and a dedicated power supply device.

In some embodiments, a time delay between the receiving of the trigger signal by the zero-power-consumption device and the sending of the back scattering signal is a preset value, or, the time delay is configured by the first sidelink communication device and informed to the zero-power-consumption device, or, the time delay is configured by the second sidelink communication device and informed to the zero-power-consumption device.

In some embodiments, the first sidelink communication device may send a trigger signal to the zero-power-consumption device by the second sidelink communication device after a T10 time delay of sending the supply signal to the zero-power-consumption device.

The zero-power-consumption device may proceed back scattering communication to the first or second sidelink communication device after a time delay of T11 of receiving the trigger signal.

Specifically, T10 may be a preset value, i.e., a pre-negotiated tripartite determination by the second communication device, the third communication device, and the zero-power-consumption device. It may also be a configurable value, which may be, for example, a value associated with communication distance, carrier frequency, power of supply/trigger signal transmission, etc. In the case of configuration, the second communication device may carry the configured value in the power supply signal. It can also be sent to the third communication device or zero-power-consumption device by means of other signaling, also determined by the second communication device based on the measurement results.

Specifically, T11 may be a preset value, i.e., mutually negotiated in advance between the third communication device and the zero-power-consumption consumption device. It can also be a configurable value, for example, it can be a value associated with the communication distance, carrier frequency, power of supply/trigger signal transmission, etc. In the case of configuration, the third communication device may carry the configured value in the power supply signal. It can also be sent to the zero-power-consumption device by means of other signaling, also determined by the third communication device based on the measurement results.

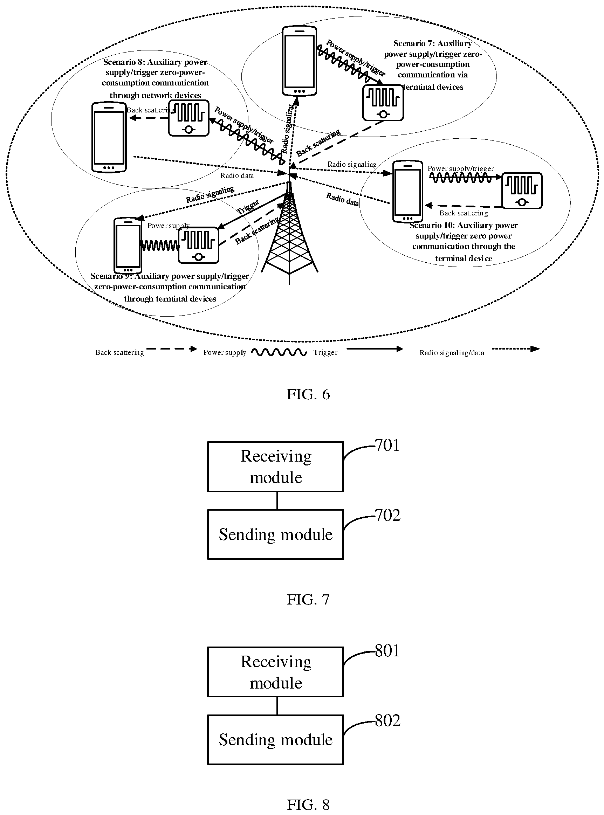

FIG. 6 is a schematic view of a hybrid zero-power-consumption communication system based on cellular communication and sidelink communication provided in some embodiments of the present disclosure. The disclosure is used in scenarios 7-10.

### Scenario 7: Auxiliary power supply/trigger zero-power-consumption communication via terminal devices.

The terminal device plays an auxiliary role between the network device and the zero-power-consumption device communication. Specifically, the zero-power-consumption device is assisted by one or more terminal devices for both power supply and communication trigger, and the zero-power-consumption device sends a signal to the network device using backscattering after obtaining sufficient power and receiving a trigger signal.

The specific process is as follows:
Step 1: the network device sends radio signaling to the terminal device, wherein the radio signaling is used to instruct the terminal device to send a power supply signal as well as a trigger signal to the zero-power-consumption device;
Step 2: based on the radio signaling, the terminal device sends a power supply signal to the zero-power-consumption device for supplying power to the zero-power-consumption consumption device;
Step 3: based on the radio signaling, the terminal device sends a trigger signal to the zero-power-consumption device;
Step 4: based on the trigger signal and the power supply signal, the zero-power-consumption device sends a back scattering signal to the network device.

In case the network device sends the power supply signal as well as the trigger signal to several different terminal devices separately, the specific process is as follows:
Step 1: the network device sends a first radio signaling to the first terminal device, wherein the first radio signaling is used to instruct the terminal device to send the power supply signal to the zero-power-consumption device;
Step 2: the network device sends a second radio signaling to the second terminal device, wherein the second radio signaling is used to instruct the terminal device to send a trigger signal to the zero-power-consumption device;
Step 3: based on the radio signaling, the first terminal device sends a power supply signal to the zero-power-consumption device for supplying power to the zero-power-consumption device;
Step 4: based on the radio signaling, the second terminal device sends a trigger signal to the zero-power-consumption device;
Step 5: based on the trigger signal, the zero-power consumption device sends a back scattering signal to the network device.

In some embodiments, a time delay between the terminal device sending the power supply signal and sending the trigger signal is a preset value; or, the time delay is configured by the network device and informed through radio signaling;
a time delay between receiving a trigger signal by the zero-power-consumption device and sending a back scattering signal by the zero-power-consumption device is a preset value; or configured by the network device and informed to the terminal device through the radio signaling, and informed to the zero-power-consumption device by the terminal device, or informed to the zero-power-consumption device by the network device;
a time delay between receiving the radio signaling by the terminal device and sending the power supply signal is a preset value; or configured by the network device and informed to the terminal device through the radio signaling.

In some embodiments, the time delay between receiving the radio signaling by the terminal device and sending the trigger signal is a preset value; or configured by the network device and informed through the radio signaling.

In some embodiments, with the same terminal devices, for example:
The terminal device may send a power supply signal to the zero-power-consumption device after a time delay of T12 after receiving the radio signaling.

The terminal device may send a trigger signal to the zero-power-consumption device after a T13 time delay of sending the power supply signal to the zero-power-consumption device.

The zero-power-consumption device may proceed back scattering communication to the network device after a T14 time delay of receiving the trigger signal.

In some embodiments, with different terminal devices, for example:
The first terminal device may send a power supply signal to the zero-power-consumption device after a time delay of T15 after receiving the first radio signaling.

The second terminal device may send a trigger signal to the zero-power-consumption device after a time delay of T16 after receiving the first radio signaling.

The zero-power-consumption device may proceed back scattering communication to the network device after a time delay T17 of receiving the trigger signal.

T12, T15, and T16 may be a preset value; or it may be a value that the network device informs the terminal device through radio signaling, such as a value associated with the communication distance, carrier frequency, power of supply/trigger signal transmission, etc.

T13 may be a preset value; or it may be a value that the network device informs the terminal device through radio signaling, such as a value associated with the communication distance, carrier frequency, power of supply/trigger signal transmission, etc.

T14 and T17 may be a preset value; or, the network device informs the terminal device through radio signaling. The terminal device further informs the zero-power-consumption of the time delay through signaling, e.g., via trigger signal, SRS, PUSCH, PRACH, PUCCH, etc.

Scenario 8: Auxiliary power supply/trigger zero-power-consumption communication through network devices.

The network device plays an auxiliary role. Specifically, the terminal device receives the back scattering signal by the zero-power-consumption device, which in turn sends it to the network device in the form of radio data. Both the power supply and communication trigger of the zero-power-consumption device are undertaken by the network device. The zero-power-consumption device uses backscattering to send signals to the terminal device after it has acquired enough power and received the trigger signal.

The specific process is as follows:
Step 1: the network device sends a power supply signal to the zero-power-consumption device for supplying power to the zero-power-consumption device;
Step 2: the network device sends a trigger signal to the zero-power-consumption device;
Step 3: based on the trigger signal and the power supply signal, the zero-power-consumption device sends a back scattering signal to the terminal device; and
Step 4: based on the back scattering signal, the terminal device sends radio data to the network device.

In some embodiments, a time delay between sending the power supply signal by the network device and sending the trigger signal by the network device is a preset value or a configurable value;
a time delay between receiving the trigger signal by the zero-power-consumption device and sending the back scattering signal by the zero-power-consumption device is a preset value; or configured by the network device and informed;
a time delay between receiving the back scattering signal by the terminal device and sending radio data by the terminal device is a preset value; or configured by the network device and informed to the terminal device; or configured by the network device and informed to the zero-power consumption device, and informed to the terminal device by the zero-power-consumption device through the back scattering signal.

In some embodiments, the network device may send a trigger signal to the zero-power-consumption device after a T18 time delay of sending the power supply signal to the zero-power-consumption device.

The zero-power-consumption device may proceed back scattering communication to the end device after a T19 time delay of receiving the trigger signal.

The terminal device may send radio data to the network device after a T20 time delay after the back scattering signal is received by the terminal device.

T18 may be a preset value; or it may be a configurable value, such as a value associated with the communication distance, carrier frequency, power of supply/trigger signal transmission, etc.

T19 may be a preset value; or it may be a value for network device notification, such as a value associated with communication distance, carrier frequency, power of supply/trigger signal transmission, etc. The base station notification may be made by signaling, such as trigger signal, PDCCH, PDSCH, PBCH, etc.

T20 can be a preset value; it can also be the value that the network device informs the intelligent terminal through radio signaling; it can also be the value that the network informs the zero-power-consumption device through the trigger signal, and then the zero-power-consumption device informs the intelligent terminal through back scattering. The value can be the value associated with the communication distance, carrier frequency, and power of supply/trigger signal transmission.

### Scenario 9: Auxiliary power supply/trigger zero-power-consumption communication through terminal devices

The terminal device plays an auxiliary role between the network device and the zero-power-consumption device communication. Specifically, after the terminal device receives the radio signaling sent from the network device, it then supplies power to the zero-power-consumption device. The communication trigger of the zero-power-consumption device is controlled by the network device. The zero-power-consumption device sends a signal to the network device using backscattering after it has acquired enough power and received the trigger signal.

The specific process is as follows:
Step 1: the network device sends radio signaling to the terminal device, wherein the radio signaling is used to instruct the terminal device to send a power supply signal to the zero-power-consumption device;
Step 2: based on the radio signaling, the terminal device sends a power supply signal to the zero-power-consumption device for supplying power to the zero-power-consumption device;
Step 3: the network device sends a trigger signal to the zero-power-consumption device;
Step 4: based on the trigger signal and the power supply signal, the zero-power-consumption device sends a back scattering signal to the network device.

In some embodiments, the time delay between the network device sending the radio signaling and sending the trigger signal is a preset value, or, a configurable value;
the time delay between the zero-power-consumption device receiving the trigger signal and sending the back scattering signal is a preset value; or, the time delay is configured and informed through the network device;
the time delay between receiving the radio signaling by the terminal device and sending the supply signal is a preset value; or, the time delay is configured and informed to the terminal device by the network device through null signaling.

In some embodiments, the terminal device may send the power supply signal to the zero-power-consumption device after a time delay of T21 of receiving the radio signaling.

The network device may send a trigger signal from the network device to the zero-power-consumption device after a T22 time delay of sending the radio signaling to the terminal device.

The zero-power-consumption device may send a back scattering signal to the network device after a T23 time delay of receiving the trigger signal.

T21 may be a preset value; or it may be a value that the network device informs the intelligent terminal through radio signaling, such as a value associated with communication distance, carrier frequency, power of supply/trigger signal transmission, etc.

T22 may be a preset value; or it may be a configurable value, such as a value associated with the communication distance, carrier frequency, power of supply/trigger signal transmission, etc.

T23 can be a preset value; or it may be a value informed by the network, such as a value associated with communication distance, carrier frequency, power of supply/trigger signal transmission, etc. The network informing may be informed by signaling, such as trigger signal, PDCCH, PDSCH, PBCH, etc.

Scenario 10: Auxiliary power supply/trigger zero power communication through the terminal device.

The terminal device plays an auxiliary role between the network device and the zero-power-consumption device communication. Specifically, the terminal device supplies power and triggers the communication to the zero-power-consumption device. The terminal sends radio signaling data to the network device after receiving the back scattering signal from the zero-power-consumption device. The power supply and communication trigger of the zero-power-consumption device are controlled by the terminal device, and after acquiring enough power and receiving the trigger signal, it sends the signal to the terminal device using the backscattering method.

The specific process is as follows:
Step 1: the network device sends radio signaling to the terminal device, wherein the radio signaling is used to instruct the terminal device to send the power supply signal and the trigger signal to the zero-power-consumption device;
Step 2: based on the radio signaling, the terminal device sends a power supply signal to the zero-power-consumption device for supplying power to the zero-power-consumption device;
Step 3: based on the radio signaling, the terminal device sends a trigger signal to the zero power consumption device;
step 4: based on the trigger signal, the zero-power-consumption device sends a back scattering signal to the terminal device; and
Step 5: based on the back scattering signal, the terminal device sends the radio signaling data to the network device.

In some embodiments, a time delay between sending the power supply signal by the terminal device and sending the trigger signal by the terminal device is a preset value; or configured by the network device and informed to the terminal device;
a time delay between receiving the trigger signal by the zero-power-consumption device and sending the back scattering signal by the zero-power-consumption device is a preset value; or configured by the network device and informed to the terminal device through the radio signaling, and informed to the zero-power-consumption device by the terminal device or informed to the zero-power-consumption device by the network device;
a time delay between receiving the radio signaling by the terminal device and sending the power supply signal by the terminal device is a preset value; or configured by the network device and informed to the terminal device;
a time delay between receiving the back scattering signal by the terminal device and sending radio signaling data by the terminal device is a preset value; or configured by the network device and informed to the terminal device; or configured by the network device and informed to the terminal device, and informed to the terminal device by the zero-power-consumption device.

In some embodiments, a time delay between receiving the radio signaling by the terminal device and sending the trigger signal by the terminal device is a preset value, or, the time delay is configured by the network device and informed to the terminal device.

In some embodiment, the T24 time delay is between sending the power supply signal by the zero-power-consumption device and sending the trigger signal by the zero-power-consumption device;
T25 time delay is between receiving the trigger signal by the zero-power-consumption device and sending the back scattering communication by the zero-power-consumption device;
T26 time delay is between receiving the radio signaling by the terminal device and the sending the power supply signal;
T27 time delay is between receiving the back scattering signal by the terminal device and transmitting the radio data;
T24 may be a preset value; or it may be a value informed by the base station device through the radio signaling, which may be, for example, a value associated with communication distance, carrier frequency, power of supply/trigger signal transmission, etc.
T25 may be a preset value; or, the base station device informs the intelligent terminal through radio signaling. The intelligent terminal further informs the by the zero-power-consumption device of the delay through signaling, e.g., via trigger signal, SRS, PUSCH, PRACH, PUCCH, etc.
T26 may be a preset value; or, it may be a value that the base station device informs the intelligent terminal through radio signaling, such as a value associated with the communication distance, carrier frequency, power of supply/trigger signal transmission, etc.
T27 may be a preset value; or, it may be a value that the base station device informs the intelligent terminal through radio signaling; or it may be a value that the base station informs the zero-power-consumption device through the trigger signal, and in turn the zero-power-consumption device informs the intelligent terminal through back scattering. The value can be a value associated with the communication distance, carrier frequency, power of supply/trigger signal transmission, etc.

From the description of the above embodiments, it is clear to those skilled in the art that the method according to the above embodiments can be implemented with the help of software plus the necessary common hardware platform, or of course by hardware, but in many cases the former is the better implementation. Based on this understanding, the technical solution of the present disclosure, in essence, or the part that contributes to the prior art, may be embodied in the form of a software product, which is stored in a storage medium (e.g., ROM/RAM, disk, CD-ROM) and includes several instructions to enable a terminal device (which may be a cell phone, computer, server, or network device, etc.) to perform the method described in various embodiments of the present disclosure.

Referring to FIG. 7, FIG. 7 is a block diagram of a zero-power-consumption communication apparatus based on cellular communication provided in some embodiments of the present disclosure, the apparatus including:
a receiving module 701, applied to receiving a power supply signal, wherein the power supply signal is configured to supply power to the zero-power-consumption device;
the receiving module, further applied to receiving a trigger signal sent from the network device,
a sending module 702, applied to sending a signal through a back scattering way according to the power supply signal and the trigger signal.

In some embodiments, the receiving module 701, for:
receiving the power supply signal sent from the network device;
the transmitting module 702, for:
   sending a back scattering signal to the network device based on the trigger signal and the power supply signal.

In some embodiments, a time delay between the network device sending the power supply signal and sending the trigger signal is a preset value, or, a configurable value;
a time delay between the zero-power-consumption device receiving the trigger signal to sending the back scattering signal is a preset value, or, the time delay is configured by the network device and informed to the zero-power device.

In some embodiments, the receiving module 701, for:
receiving the power supply signal sent from the network device;
the sending module 702, for:
   send a signal to a terminal device by backscattering based on the trigger signal and the power supply signal.

In some embodiments, the sending module 702 for:
the zero-power-consumption device to send a sleeping signal or a wake-up signal to the terminal device by backscattering according to the trigger signal and the supply signal.

In some embodiments, the time delay between the network device sending the power supply signal and sending the trigger signal is a preset value, or, a configurable value;
a time delay between receiving the trigger signal by the zero-power-consumption device to sending the sleeping signal or the wake-up signal by the zero-power-consumption device is a preset value, or, the time delay is configured by the network device and informed to the zero-power device.

In some embodiments, the receiving module 701, for:
receiving a power supply signal sent from a first communication device, the first communication device being different from the network device;
the transmitting module 702, for:
   sending a back scattering signal to the network device based on the trigger signal and the power supply signal.

In some embodiments, a time delay between receiving the trigger signal by the zero-power-consumption device and sending the back scattering signal by the zero-power-consumption device is a preset value, or, the time delay is configured by the network device and informed to the zero-power device.

Referring to FIG. 8, FIG. 8 is a block diagram of a zero-power-consumption communication apparatus based on sidelink communication provided in some embodiments of the present disclosure, the device including:
a receiving module 801, applied to receiving a power supply signal sent from a first sidelink communication device, wherein the power supply signal is configured to supply power to the zero-power-consumption device;
the receiving module 801, further applied to receiving a trigger signal sent from a second sidelink communication device;
a sending module 802, sending a back scattering signal to the first sidelink communication device or the second sidelink communication device according to the power supply signal and the trigger signal.

In some embodiments, the first sidelink communication apparatus and the second sidelink communication apparatus is the same sidelink communication apparatus.

The first sidelink communication device and the second sidelink communication device are terminal devices; or, the first sidelink communication device and the second sidelink communication device is gateway devices.

In some embodiments, a time delay between the sending the supply signal by the terminal device and sending the trigger signal by the terminal device is a preset value; or, a configurable value; a time delay between the receiving the trigger signal by the zero-power-consumption device and sending the back scattering signal by the zero-power-consumption device is a preset value; or, a time delay configured by the terminal device and informed to the zero-power-consumption device.

a time delay between sending the power supply signal by the gateway device and sending the trigger signal by the gateway device is a preset value or a configurable value; a time delay between receiving the trigger signal by the zero-power-consumption device and sending a back scattering signal by the zero-power-consumption device is a preset value; or configured by the gateway device and informed to the zero-power-consumption device.

In some embodiments, the first sidelink communication device and the second sidelink communication device are different sidelink communication devices;
The first sidelink communication device is any one of a terminal device, a gateway device, and a dedicated power supply device.

The second side-line communication device is any one of a terminal device, a gateway device, and a dedicated power supply device.

In some embodiments, a time delay between receiving the trigger signal by the zero-power-consumption device and sending the back scattering signal by the zero-power-consumption device is a preset value; or configured by the first sidelink communication device and informed to the zero-power-consumption device; or configured by the second sidelink communication device and informed to the zero-power-consumption device.

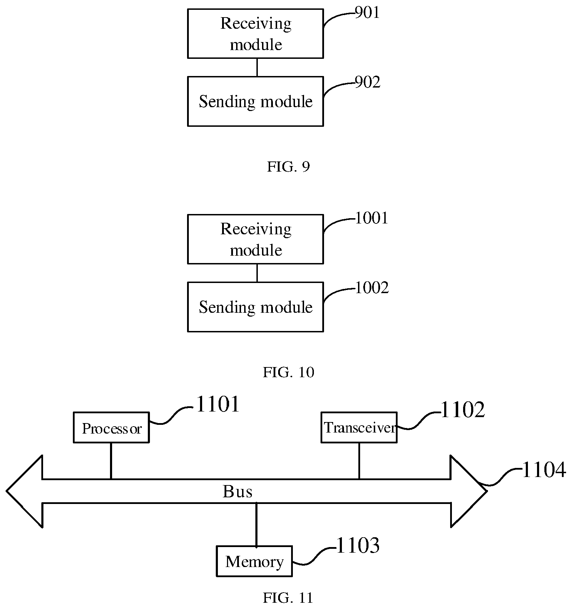

Referring to FIG. 9, FIG. 9 is a block diagram of a zero-power-consumption communication apparatus based on cellular communication and sidelink communication provided in some embodiments of the present disclosure, the apparatus including:
a receiving module 901 applied to receiving a power supply signal sent from a terminal device, wherein the power supply signal is configured to supply power to the zero-power-consumption device;
the receiving module 901, further applied to receiving a trigger signal;
a sending module 902, sending a back scattering signal to the network device according to the power supply signal and the trigger signal.

In some embodiments, the power supply signal is sent from the terminal device based on the radio signaling sent from the network device.
The receiving module 901 for:
receiving a trigger signal sent from the terminal device, wherein the trigger signal is sent from the terminal device based on the radio signaling.

In some embodiments, a time delay between sending a power supply signal by the terminal device and sending a trigger signal by the terminal device is a preset value; or configured by the network device and informed through the radio signaling;
a time delay between receiving a trigger signal by the zero-power-consumption device and sending a back scattering signal by the zero-power-consumption device is a preset value; or configured by the network device and informed to the terminal device through the radio signaling, and informed to the zero-power-consumption device by the terminal device, or informed to the zero-power-consumption device by the network device;
a time delay between receiving the radio signaling by the terminal device and sending the power supply signal is a preset value; or configured by the network device and informed to the terminal device through the radio signaling.

In some embodiments, the supply signal is sent from the terminal device based on the radio signaling sent from the network device.

The receiving module 901, for:
receiving a trigger signal sent from the network device.

In some embodiments, a time delay between sending the radio signaling by the network device and sending the trigger signal by the network signal device is a preset value or a configurable value;
a time delay between receiving the trigger signal by the zero-power-consumption device and sending a back scattering signal by the zero-power-consumption device is a preset value; or configured by the network device and informed;
a time delay between receiving the radio signaling by the terminal device and sending the power supply signal by the terminal device is a preset value; or configured by the network device and informed to the terminal device by the radio signaling.

Referring to FIG. 10, FIG. 10 is a block diagram of a zero-power-consumption communication apparatus based on cellular communication and sidelink communication provided in some embodiments of the present disclosure, the device including:
a receiving module 1001, applied to receiving a power supply signal and a trigger signal, wherein the power supply signal is configured to supply power to the zero-power-consumption device; and the power supply signal and the trigger signal are sent under the control of a network device;
transmitting module 1002, applied to sending a back scattering signal to a terminal device according to the power supply signal and the trigger signal, to send radio data by the terminal device to the network device according to the back scattering signal.

In some embodiments, the receiving module 1001, for:
receiving a power supply signal sent from the network device;
receiving a trigger signal sent from the network device.

In some embodiments, the time delay between sending the power supply signal by the network device and sending the trigger signal by the network device is a preset value or a configurable value;
a time delay between receiving the trigger signal by the zero-power-consumption device and sending the back scattering signal by the zero-power-consumption device is a preset value; or configured by the network device and informed;
a time delay between receiving the back scattering signal by the terminal device and sending radio data by the terminal device is a preset value; or configured by the network device and informed to the terminal device; or configured by the network device and informed to the zero-power consumption device, and informed to the terminal device by the zero-power-consumption device through the back scattering signal.

In some embodiments, the receiving module 1001, for:
receiving a power supply signal sent from the terminal device
receiving a trigger signal sent from the terminal device;
wherein the power supply signal and the trigger signal are sent from the terminal device according to the radio signal sent from the network device.

In some embodiments, a time delay between sending the power supply signal by the terminal device and sending the trigger signal by the network device is a preset value; or configured by the network device and informed to the terminal device;
a time delay between receiving the trigger signal by the zero-power-consumption device and sending the back scattering signal by the zero-power-consumption device is a preset value; or configured by the network device and informed to the terminal device through the radio signaling, and informed to the zero-power-consumption device by the terminal device or informed to the zero-power-consumption device by the network device;
a time delay between receiving the radio signaling by the terminal device and sending the power supply signal is a preset value; or configured by the network device and informed to the terminal device;
a time delay between receiving the back scattering signal by the terminal device and sending radio data by the terminal device is a preset value; or configured by the network device and informed to the terminal device; or configured by the network device and informed to the terminal device and informed to the terminal device by the zero-power-consumption device.

Reference to FIG. 11, FIG. 11 is a block diagram of a zero-power-consumption communication system provided in some embodiments of the present disclosure. The zero-power-consumption device includes: a processor 1101, a transceiver 1102, a memory 1103, and a bus 1104.

The processor 1101 includes one or more processing cores, and the processor 1101 performs various functions as well as information processing by running software programs as well as modules.

The transceiver 1102 is used to send and receive signals The transceiver 1102 may be a communication chip.

The memory 1103 is connected to the processor 1101 through bus 1104.

The memory 1104 may be used to store a computer program, and the processor 1101 is used to execute the computer program to control the transceiver 1102 to implement the various steps performed by the zero-power-consumption device in the method embodiment described above.

Embodiments of the present disclosure also provide a computer program product or computer program. The computer program product or computer program includes computer instructions. The computer instructions are stored in a computer readable storage medium, and the processor of zero-power-consumption device reads from the computer readable storage medium and executing the computer instructions to implement the zero-power-consumption communication method described above.

Obviously, it should be understood by those skilled in the art that the modules or steps of the present disclosure described above may be implemented with a generic computing device, they may be centralized on a single computing device or distributed on a network formed by a plurality of computing devices. In some embodiments, they may be implemented with program code executable by the computing device, thus, they may be stored in a storage device to be executed by the computing device. And in some cases, the steps shown or described may be executed in a different order than herein, or they may be implemented separately as individual integrated circuit modules, or multiple modules or steps thereof may be implemented as individual integrated circuit modules. In this way, the present disclosure is not limited to any particular combination of hardware and software.

The foregoing is only some embodiments of the present disclosure, and is not intended to limit the present disclosure, which is subject to various changes and variations for those skilled in the art. Any modification, equivalent replacement, improvement, etc. made within the principles of this disclosure shall be included in the scope of protection of the present disclosure.

## Claims

1. A zero-power-consumption communication method based on cellular communication, comprising:
receiving a power supply signal, by a zero-power-consumption device, wherein the power supply signal is configured to supply power to the zero-power-consumption device;
receiving a trigger signal, by the zero-power-consumption device, wherein the trigger signal is sent from a network device;
sending a signal, by the zero-power-consumption device, through a back scattering way according to the power supply signal and the trigger signal.

2. The method as claimed in claim 1, wherein the receiving the power supply signal by the zero-power-consumption device, comprises:
receiving the power supply signal, by the zero-power-consumption device, wherein the power supply signal is sent from the network device; and
the sending the signal, by the zero-power-consumption device, through the back scattering way according to the power supply signal and the trigger signal comprises:
sending a back scattering signal, by the zero-power-consumption device, to the network device according to the power supply signal and the trigger signal.

3. The method as claimed in claim 2, wherein a time delay between sending the power supply signal by the network device and sending the trigger signal by the network device is a preset value or a configurable value;
a time delay between receiving the trigger signal by the zero-power-consumption device and sending the back scattering signal by the zero-power-consumption device is a preset value; or configured by the network device and informed to the zero-power-consumption device.

4. The method as claimed in claim 1, the receiving the power supply signal by the zero-power-consumption device, comprises:
receiving the power supply signal, by the zero-power-consumption device, wherein the power supply signal is sent from the network device;
the sending the signal, by the zero-power-consumption device, through the back scattering way according to the power supply signal and the trigger signal comprises:
sending a signal, by the zero-power-consumption device, to a terminal device through the back scattering way according to the power supply signal and the trigger signal.

5. The method as claimed in claim 4, wherein the sending the signal by the zero-power-consumption device to a terminal device through the back scattering way according to the power supply signal and the trigger signal comprises:
sending a sleeping signal or a wake-up signal by the zero-power-consumption device to a terminal device through the back scattering way according to the power supply signal and the trigger signal.

6. The method as claimed in claim 5, wherein a time delay between sending the power supply signal by the network device and sending the trigger signal by the network device is a preset value or a configurable value;
a time delay between receiving the trigger signal by the zero-power-consumption device and sending the sleeping signal or the wake-up signal by the zero-power-consumption device is a preset value; or configured by the network device and informed to the zero-power-consumption device.

7. The method as claimed in claim 1, wherein the receiving the power supply signal by the zero-power-consumption device, comprises:
receiving the power supply signal, by a zero-power-consumption device, sent from a first communication device, wherein the first communication device is different from the network device;
the sending a back scattering signal, by the zero-power-consumption device, through the back scattering way according to the power supply signal and the trigger signal comprises:
sending a back scattering signal, by the zero-power-consumption device, to the network device according to the power supply signal and the trigger signal.

8. The method as claimed in claim 7, wherein a time delay between receiving the trigger signal by the zero-power-consumption device and sending the back scattering signal by the zero-power-consumption device is a preset value; or configured by the network device and informed to the zero-power-consumption device.

9. A zero-power-consumption communication method based on sidelink communication, comprising:
receiving a power supply signal sent from a first sidelink communication device, by a zero-power-consumption device, wherein the power supply signal is configured to supply power to the zero-power-consumption device;
receiving a trigger signal, by the zero-power-consumption device, wherein the trigger signal is sent from a second sidelink communication device;
sending a back scattering signal, by the zero-power-consumption device, to the first sidelink communication device or the second sidelink communication device according to the power supply signal and the trigger signal.

10. The method as claimed in claim 9, wherein the first sidelink communication device and the second sidelink communication device are a same sidelink communication device;
the first sidelink communication device and the second sidelink communication device are terminal devices; or the first sidelink communication device and the second sidelink communication device are gateway devices.

11. The method as claimed in claim 10, wherein a time delay between sending the power supply signal by the terminal device and sending the trigger signal by the terminal device is a preset value or a configurable value; a time delay between receiving the trigger signal by the zero-power-consumption device and sending a back scattering signal by the zero-power-consumption device is a preset value; or configured by the terminal device and informed to the zero-power-consumption device;
a time delay between sending the power supply signal by the gateway device and sending the trigger signal by the gateway device is a preset value or a configurable value; a time delay between receiving the trigger signal by the zero-power-consumption device and sending a back scattering signal by the zero-power-consumption device is a preset value; or configured by the gateway device and informed to the zero-power-consumption device.

12. The method as claimed in claim 9, wherein the first sidelink communication device and the second sidelink communication device are different sidelink communication devices;
the first sidelink communication device is any one of a terminal device, a gateway device, and a dedicated power supply device;
the second sidelink communication device is any one of a terminal device, a gateway device, and a dedicated power supply device.

13. The method as claimed in claim 12, wherein a time delay between receiving the trigger signal by the zero-power-consumption device and sending the back scattering signal by the zero-power-consumption device is a preset value; or configured by the first sidelink communication device and informed to the zero-power-consumption device; or configured by the second sidelink communication device and informed to the zero-power-consumption device.

14. A zero-power-consumption communication method based on cellular communication and sidelink communication, comprising:
receiving the power supply signal sent from a terminal device, by a zero-power-consumption device, wherein the power supply signal is configured to supply power to the zero-power-consumption device;
receiving the trigger signal, by the zero-power-consumption device;
sending the back scattering signal, by the zero-power-consumption device, to the network device according to the power supply signal and the trigger signal.

15. The method as claimed in claim 14, wherein the power supply signal is sent from the terminal device according to a radio signaling sent from a network device;
the receiving the trigger signal, by the zero-power-consumption device, comprises:
receiving the trigger signal sent from the terminal device, by the zero-power-consumption device, wherein the trigger signal is sent from the terminal device according to the radio signaling.

16. The method as claimed in claim 15, wherein a time delay between sending a power supply signal by the terminal device and sending a trigger signal by the terminal device is a preset value; or configured by the network device and informed through the radio signaling;
a time delay between receiving a trigger signal by the zero-power-consumption device and sending a back scattering signal by the zero-power-consumption device is a preset value; or configured by the network device and informed to the terminal device through the radio signaling, and informed to the zero-power-consumption device by the terminal device, or informed to the zero-power-consumption device by the network device;
a time delay between receiving the radio signaling by the terminal device and sending the power supply signal is a preset value; or configured by the network device and informed to the terminal device through the radio signaling.

17. The method as claimed in claim 14, wherein the power supply signal is sent from the terminal device according to a radio signaling sent from the network device;
the receiving the trigger signal, by the zero-power-consumption device, comprises:
receiving a trigger signal sent from the network device, by the zero-power-consumption device.

18. The method as claimed in claim 17, wherein a time delay between sending the radio signaling by the network device and sending the trigger signal by the network signal device is a preset value or a configurable value;
a time delay between receiving the trigger signal by the zero-power-consumption device and sending a back scattering signal by the zero-power-consumption device is a preset value; or configured by the network device and informed;
a time delay between receiving the radio signaling by the terminal device and sending the power supply signal by the terminal device is a preset value; or configured by the network device and informed to the terminal device by the radio signaling.

19. A zero-power-consumption communication method based on cellular communication and sidelink communication, comprising:
receiving a power supply signal and a trigger signal, by a zero-power-consumption device, wherein the power supply signal is configured to supply power to the zero-power-consumption device; and the power supply signal and the trigger signal are sent under the control of a network device;
sending a back scattering signal, by the zero-power-consumption device, to a terminal device according to the power supply signal and the trigger signal, in order to send radio data by the terminal device to the network device according to the back scattering signal.

20. The method as claimed in claim 19, wherein the receiving a power supply signal and a trigger signal by a zero-power-consumption device, comprises:
receiving the power supply signal, by the zero-power-consumption device, wherein the power supply signal is sent from the network device;
receiving the trigger signal, by the zero-power-consumption device, wherein the power supply signal is sent from the network device;

21. The method as claimed in claim 20, wherein a time delay between sending the power supply signal by the network device and sending the trigger signal by the network device is a preset value or a configurable value;
a time delay between receiving the trigger signal by the zero-power-consumption device and sending the back scattering signal by the zero-power-consumption device is a preset value; or configured by the network device and informed;
a time delay between receiving the back scattering signal by the terminal device and sending radio data by the terminal device is a preset value; or configured by the network device and informed to the terminal device; or configured by the network device and informed to the zero-power consumption device, and informed to the terminal device by the zero-power-consumption device through the back scattering signal.

22. The method as claimed in claim 19, wherein the receiving a power supply signal and a trigger signal by a zero-power-consumption device, comprises:
receiving the power supply signal, by the zero-power-consumption device, wherein the power supply signal is sent from the terminal device;
receiving the trigger signal, by the zero-power-consumption device, wherein the power supply signal is sent from the terminal device;
wherein the power supply signal and the trigger signal are sent from the terminal device according to the radio signal sent from the network device.

23. The method as claimed in claim 22, wherein a time delay between sending the power supply signal by the terminal device and sending the trigger signal by the network device is a preset value; or configured by the network device and informed to the terminal device;
a time delay between receiving the trigger signal by the zero-power-consumption device and sending the back scattering signal by the zero-power-consumption device is a preset value; or configured by the network device and informed to the terminal device through the radio signaling, and informed to the zero-power-consumption device by the terminal device or informed to the zero-power-consumption device by the network device;
a time delay between receiving the radio signaling by the terminal device and sending the power supply signal is a preset value; or configured by the network device and informed to the terminal device;
a time delay between receiving the back scattering signal by the terminal device and sending radio data by the terminal device is a preset value; or configured by the network device and informed to the terminal device; or the configured by the network device and informed to the terminal device and informed to the terminal device by the zero-power-consumption device.

24. A zero-power consumption communication apparatus based on cellular communication, comprising:
a receiving module, applied to receiving a power supply signal, wherein the power supply signal is configured to supply power to the zero-power-consumption device;
the receiving module, further applied to receiving a trigger signal;
a sending module, applied to sending a signal through a back scattering way according to the power supply signal and the trigger signal.

25. A zero-power consumption communication apparatus based on sidelink communication, comprising:
a receiving module, applied to receiving a power supply signal sent from a first sidelink communication device, wherein the power supply signal is configured to supply power to the zero-power-consumption device;
the receiving module, further applied to receiving a trigger signal sent from a second sidelink communication device;
a sending module, sending a back scattering signal to the first sidelink communication device or the second sidelink communication device according to the power supply signal and the trigger signal.

26. A zero-power-consumption communication apparatus based on cellular communication and sidelink communication, comprising:
A receiving module, applied to receiving a power supply signal sent from a terminal device, wherein the power supply signal is configured to supply power to the zero-power-consumption device;
the receiving module, further applied to receiving a trigger signal;
a sending module, sending a back scattering signal to the network device according to the power supply signal and the trigger signal.

27. A zero-power-consumption communication apparatus based on cellular communication and sidelink communication, comprising:
a receiving module, applied to receiving a power supply signal and a trigger signal, wherein the power supply signal is configured to supply power to the zero-power-consumption device; and the power supply signal and the trigger signal are sent under the control of a network device;
a sending module, applied to sending a back scattering signal to a terminal device according to the power supply signal and the trigger signal, in order to send radio data by the terminal device to the network device according to the back scattering signal.

28. A zero-power-consumption device comprising a processor and a transceiver, wherein the transceiver is applied to
receiving a power supply signal, wherein the power supply signal is configured to supply power to the zero-power-consumption device; receiving a trigger signal; and sending a signal through a back scattering way according to the power supply signal and the trigger signal.

29. A zero-power-consumption device comprising a processor and a transceiver, wherein the transceiver is applied to
receiving a power supply signal sent from a first sidelink communication device, wherein the power supply signal is configured to supply power to the zero-power-consumption device; receiving a trigger signal sent from a second sidelink communication device; and sending a back scattering signal to the first sidelink communication device or the second sidelink communication device according to the power supply signal and the trigger signal.

30. A zero-power-consumption device comprising a processor and a transceiver, wherein the transceiver is applied to
receiving a power supply signal sent from a terminal device, wherein the power supply signal is configured to supply power to the zero-power-consumption device; receiving a trigger signal; and sending a back scattering signal to the network device according to the power supply signal and the trigger signal.

31. A zero-power-consumption device comprising a processor and a transceiver, wherein the transceiver is applied to
receiving a power supply signal and a trigger signal, wherein the power supply signal is configured to supply power to the zero-power-consumption device; and the power supply signal and the trigger signal are sent under the control of a network device; and sending a back scattering signal to a terminal device according to the power supply signal and the trigger signal, in order to send radio data by the terminal device to the network device according to the back scattering signal.

32. A computer readable storage medium storing a computer program, wherein the computer program is executed by a processor to
perform a zero-power-consumption communication method based on cellular communication as claimed in any one of claims 1 to 8; or perform a zero-power-consumption communication method based on sidelink communication as claimed in any one of claims 9 to 13; or perform a zero-power-consumption communication method based on cellular communication and sidelink communication as claimed in any one of claims 14 to 18; or perform a zero-power-consumption communication method based on cellular communication and sidelink communication as claimed in any one of claims 19 to 23.
